# EUROPEAN PATENT APPLICATION

(11) **EP 4 000 554 A1**
(43) Date of publication of application: **25.05.2022**
(21) Application number: 21209094.8
(22) Date of filing: 18.11.2021
(51) Int. Cl.: A61C 7/16

(54) **PATIENT SPECIFIC DENTAL BANDS FOR DENTAL APPLIANCES**

(30) Priority: 23.11.2020 US 202063117120 P
(71) Applicant: Dean UltraThin Retainer, LLC, Fosston, MN 56542 (US)
(72) Inventor: SANDWICK, Todd, Fosston, MN 56542 (US)
(74) Representative: Neilson, Martin Mark

(57) **Abstract**

Patient specific dental appliances, dental bands and methods for manufacturing the dental bands. The dental bands are manufactured based on the specific anatomy of each patient so that the dental bands more closely conform to the patient's anatomy. The dental bands can include inner surfaces with an average surface roughness that is greater than an average surface roughness of an outer surface to enhance the bond between the dental band and the tooth surface. In addition, the dental bands can include marginal portions connecting the buccal and lingual surfaces of the bands that extend into marginal spaces with adjacent teeth and the marginal portions do not extend into interproximal spaces with the adjacent teeth as is required by conventional dental bands. The dental bands can also optionally include an occlusal portion that covers portions of an inner occlusal surface of the tooth and/or an outer occlusal surface of the tooth.

## Description

### Field

This technical disclosure relates to dental appliances and to dental bands for dental appliances which are manufactured specifically to match anatomy of patients intended to wear the dental appliances.

### Background

Dental appliances (also known as orthodontic appliances) have been in use for years in the dentistry field for providing a variety of benefits, for example retention of teeth after completion of an active phase of orthodontic treatment. Many dental appliances are secured to the teeth of the patients using one or more dental bands. The dental bands are typically manufactured in a "generic" manner whereby the dental bands do not match the specific anatomy of the patient.

### Summary

Patient specific dental appliances, dental bands and methods for manufacturing the dental bands are described. The dental bands are manufactured based on the specific anatomy of each patient so that the dental bands more closely conform to the patient's anatomy. The dental bands can be used with any dental appliances that are worn by patients during a course of dental/orthodontic treatment.

The term "dental appliance" is used herein interchangeably with "orthodontic appliance" and is intended to encompass any device used in dental/orthodontic treatment. Non-limiting examples of dental appliances that the dental bands described herein can be used with include, but are not limited to, space maintainers, palatal expanders, distalizing appliances, retainers, habit appliances, and other dental appliances.

The dental bands described herein can be formed of a single material. Examples of materials that can be used to form the dental bands include, but are not limited to, metals including but not limited to pure metals such as gold, platinum, or titanium or metal alloys such as stainless steel, nickel titanium or a cobalt, chromium, molybdenum alloy; graphene; carbon; carbon fiber; plastic; and ceramic.

The dental bands can be formed by a suitable additive manufacturing process. Additive manufacturing as used herein is intended to encompass any process where the dental band is created by adding layer-upon-layer of material to create the dental band. Additive manufacturing may also be referred to as 3D printing. In another embodiment, the dental bands described herein can be created using a subtractive manufacturing process. In additional embodiments, the dental bands described herein can be created using other manufacturing techniques as well, for example by casting.

In one embodiment, a dental appliance described herein can include a metal body consisting of a metal material. The metal body is configured to be secured to a tooth, for example using a bonding material or a mechanical retaining mechanism. The metal body includes a first, tooth facing surface and a second surface facing away from the tooth. The first, tooth facing surface has a first average surface roughness and the second surface has a second average surface roughness, and the first average surface roughness is greater than the second surface roughness. When a bonding material is used to secure the metal body to the tooth, the greater roughness of the first, tooth facing surface improves the bonding between the metal body and the tooth surface. In some embodiments, the metal body can be formed with the first, tooth facing surface having the first average surface roughness eliminating the need for post processing on the first, tooth facing surface to create the first average surface roughness. In other embodiments, the first, tooth facing surface can be post-processed to form the first average surface roughness. If post-processing is used, the roughness can be generated in any suitable manner including, but not limited to, mechanical, chemical or laser etching.

In some embodiments, portions or all of the body of the dental bands described herein can be formed as a rigid mesh-like structure. For example, the mesh-like structure can have a configuration like the apertured bonding pads described in US 2020/0229903. The apertures in the mesh-like structure of the dental band permits use of a radiation curable adhesive, for example an ultra-violet (UV) light curable adhesive, to secure the dental band to the tooth.

In another embodiment, a method of forming a dental band for a tooth described herein can include manufacturing a metal body consisting of a metal material, and that has a buccal side portion that is configured to match the geometry (e.g. contours, size, etc.) of a buccal surface of the tooth, and a lingual side portion that is configured to match the geometry of a lingual surface of the tooth. The buccal side portion and the lingual side portion each include a first, tooth facing surface and a second surface facing away from the tooth. In addition, the metal body is such that the first, tooth facing surfaces have a first average surface roughness and the second surfaces have a second average surface roughness, and the first average surface roughness is greater than the second surface roughness.

In another embodiment, a dental band described herein includes a metal body consisting of a metal material. The metal body is configured to be bonded to a tooth, and the metal body includes a buccal side portion, a lingual side portion, and an occlusal portion surrounding an occlusal hole. The occlusal portion is formed to match the geometry of and cover portions of an inner occlusal surface of the tooth and/or an outer occlusal surface of the tooth. In addition, the metal body is configured so that when the metal body is bonded to the tooth, the metal body has a portion that extends into a marginal space with an adjacent tooth and the portion does not extend into an interproximal space with the adjacent tooth. However, the occlusal portion is optional and the dental band can be formed without an occlusal portion so that no portion of the dental band covers occlusal surfaces of the tooth.

In another embodiment, a method of forming a dental band for a tooth described herein can include manufacturing a metal body consisting of a metal material, and that has a buccal side portion that is configured to match the geometry of a buccal surface of the tooth, a lingual side portion that is configured to match the geometry of a lingual surface of the tooth, and an occlusal portion surrounding an occlusal hole. The occlusal portion matches the geometry of and covers portions of an inner occlusal surface of the tooth and/or an outer occlusal surface of the tooth. The metal body is formed so that when the metal body is bonded to the tooth, the metal body has a portion that extends into a marginal space with an adjacent tooth and the portion does not extend into an interproximal space with the adjacent tooth. In some embodiments, a portion of the dental band may extend into the interproximal space.

### Drawings

Figure 1 is a view of a pair of patient specific dental bands described herein in place on a digital model of a patient's teeth.
Figure 2 is a perspective view of one of the dental bands of Figure 1.
Figure 3 is another perspective view of the dental band of Figure 2.
Figure 4A is a side view of molars taken along line 4-4 in Figure 1 depicting the positioning of the dental band.
Figure 4B is a view similar to Figure 4A but showing the dental band without occlusal portions.
Figure 5 is a view of another embodiment of patient specific dental bands described herein in place on a digital model of a patient's teeth.
Figure 6 is a perspective view of one of the dental bands in Figure 5.
Figure 7 is a view of another embodiment of patient specific dental bands described herein in place on a digital model of a patient's teeth.
Figure 8 is a perspective view of one of the dental bands of Figure 7.
Figure 9 is another perspective view of the dental band of Figure 8.
Figure 10 depicts another example of a dental band with a buccal or lingual tube.
Figure 11 depicts an example of a dental band with portions thereof formed as a mesh.
Figure 12 depicts an example of a dental appliance that can utilize the dental bands described herein.
Figure 13 depicts another example of a dental appliance that can utilize the dental bands described herein.
Figure 14 depicts another example of a dental appliance that can utilize the dental bands described herein.

### Detailed Description

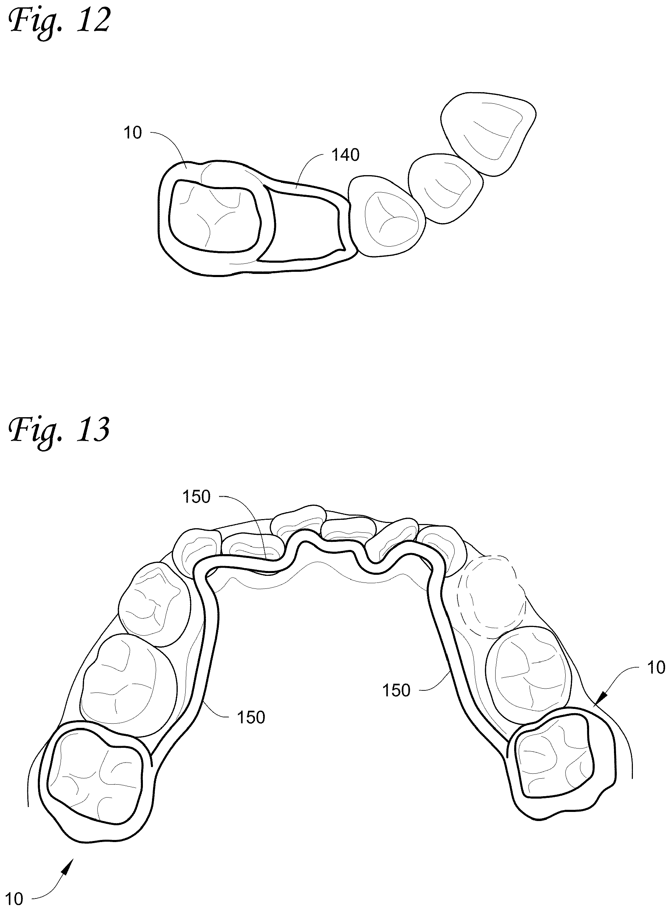

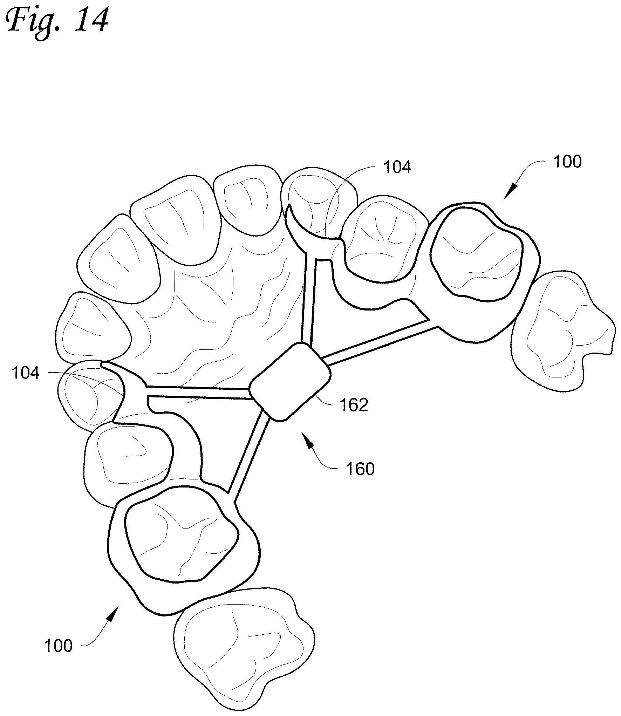

The following is a description of patient specific dental bands for dental appliances and methods for manufacturing the dental bands and dental appliances. The dental bands are manufactured based on the specific anatomy of each patient so that the dental bands more closely conform to the patient's anatomy. The dental bands can be used with any dental appliances that are worn by patients during a course of dental/orthodontic treatment. Non-limiting examples of dental appliances that the dental bands described herein can be used with include, but are not limited to, space maintainers (see Figures 12 and 13), palatal expanders (see Figure 14), distalizing appliances, retainers, habit appliances, and other dental appliances. The dental bands and dental appliances described herein can be designed for use with a patient's upper set of teeth or lower set of teeth.

The dental bands described herein can be formed from any material that provides the requisite durability and strength for the dental bands. In one embodiment, the material can be metal. The metal can be any metal suitable for use in dental applications and that provides the requisite durability and strength to perform the functions of the dental bands described herein. Examples of metals that can be used include, but are not limited to, gold, platinum, titanium, and metal alloys such as stainless steel, or an alloy primarily composed of cobalt, chromium and molybdenum. In another embodiment, the material can be a non-metallic material including, but not limited to, plastic, graphene, carbon, and carbon fiber.

The dental bands described herein, and in some embodiments the dental appliances with which they are used, can be formed by a suitable additive manufacturing process. Additive manufacturing as used herein is intended to encompass any process where the dental band is created by adding layer-upon-layer of material to create the dental band. Additive manufacturing may also be referred to as 3D printing. In another embodiment, the dental bands described herein can be created using a subtractive manufacturing process. In additional embodiments, the dental bands described herein can be created using other manufacturing techniques as well, for example by casting.

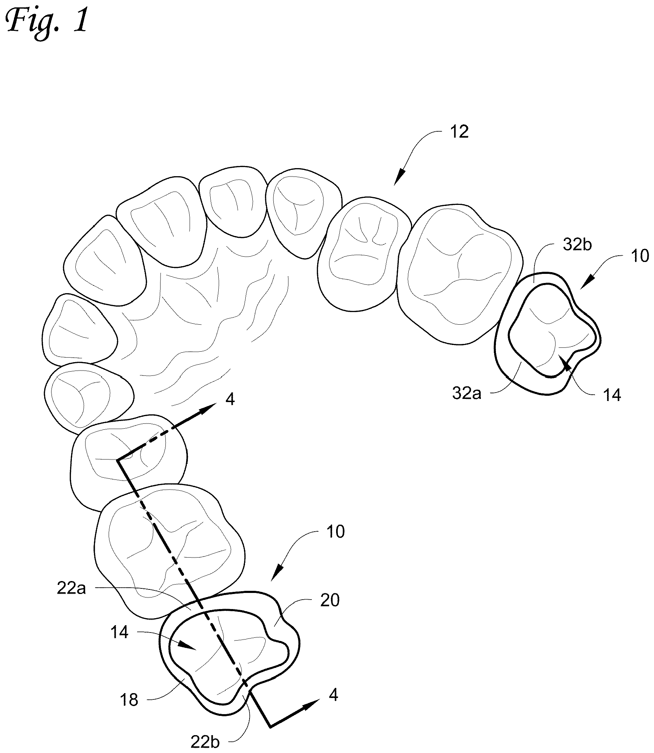

Referring initially to Figures 1-4A, a first embodiment of a patient specific dental band 10 is illustrated. A pair of the bands 10 are shown in position on a digital model 12 of a patient's set of teeth which can be either an upper set of teeth or a lower set of teeth. The digital model can be created using conventional digital scanning techniques such as performing a scan of an impression of the patient's set of teeth, using an intra-oral digital scanner to intraorally scan the patient's set of teeth, or digitally scanning a model of the patient's teeth. Examples of intra-oral scanners include, but are not limited to, Planmeca's PlanScan, 3Shape's TRIOS, Sirona's Apollo DI and OmniScan, Invisalign's Itero and 3M's True Definition Scanner. Techniques for generating digital models of patient's teeth are well known in the art.

In Figure 1, the bands 10 are depicted as being mounted on opposite molar teeth 14 of the patient. However, the bands 10 can be configured to be mounted to other teeth. In addition, in some embodiments, only a single one of the bands 10 need be used. The number of bands 10 that are present depend upon the type of dental appliance that the band(s) 10 is used with.

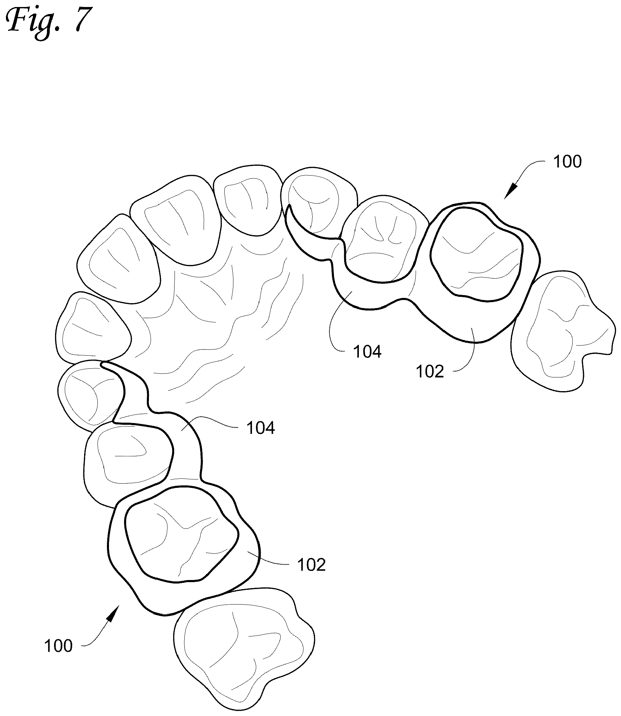

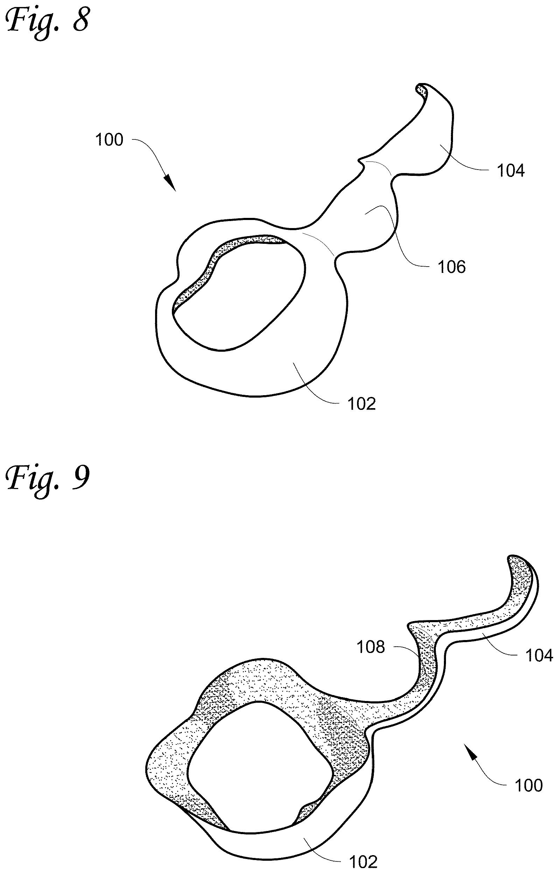

The bands 10 are generally similar in construction to one another except that each band 10 matches the geometry of the tooth 14 it is to be bonded to. Geometry refers to the contours, shapes, and sizes of the tooth 14 and its surfaces. Referring to Figures 1-3, each band 10 includes a body 16 consisting of a single material, such as a metal material. The body 16 is configured to be bonded to a tooth. The body 16 includes a buccal side portion 18, a lingual side portion 20, and marginal portions 22a, 22b interconnecting the side portions 18, 20. In this embodiment, the body 16 further includes an occlusal portion 24 surrounding an occlusal hole 26. The body 16 also includes an outer or exterior surface 28 that faces away from the tooth surfaces and an inner or interior surface 30 that faces the tooth surfaces. The body 16 is depicted as being configured to extend around or encompass the entire circumference of the tooth 14 as depicted in Figure 1. In other embodiments, the body 16 can be configured to extend around only a portion of the circumference of the tooth 14 (see Figures 7-9).

The band 10 is manufactured based on the specific anatomy of each patient so that the band 10 is specifically configured to match some or all of the tooth 14 surfaces around which the bands 10 is disposed whereby the band 10 more closely conforms to or matches the patient's anatomy. For example, a digital scan of the tooth 14 can be obtained and the band 10 can then be manufactured, for example by additive manufacturing, to match the geometry of the tooth 14. The inner surface 30 of the band 10 matches the geometry of the tooth surface. In some embodiments, a space (referred to as a cementation space) for receiving a bonding material, such as cement, is provided between the inner surface 30 and the tooth surface. The space can vary (i.e. the distance between the inner surface 30 and the tooth surface can vary) or the space can be generally constant. In one non-limiting example, the distance or gap between the inner surface 30 and the tooth surface can range, for example, from about 0.1 mm to about 0.5 mm. In some embodiments, the outer surface 28 may also match the geometry of the tooth surface. However, the outer surface 28 need not match the geometry of the tooth surfaces.

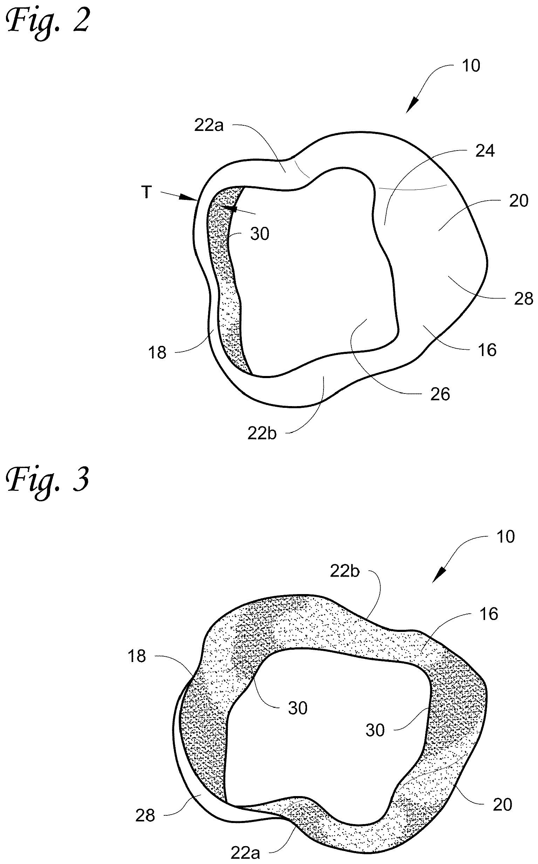

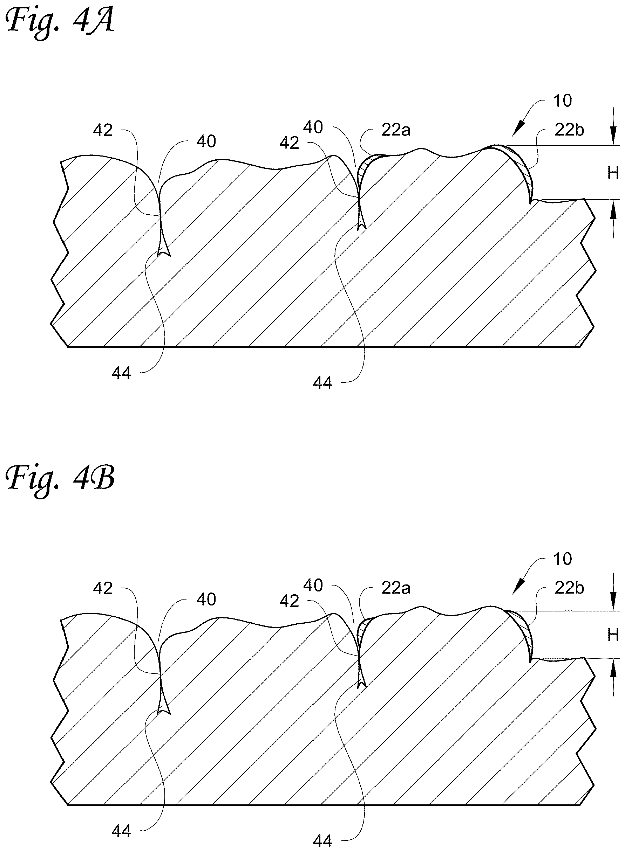

In the illustrated example, the buccal side portion 18, the lingual side portion 20, the marginal portions 22a, 22b, the occlusal portion 24, the outer surface 28, and the inner surface 30 are all shaped and configured to match the corresponding geometry of the tooth 14 that they face. Traditional dental bands are not patient specific and are not configured to match the tooth surfaces of the patient. In addition, referring to Figure 4A, a vertical height H of the band 10 varies at least partially around the circumference thereof, excluding manufacturing tolerances and other unintentional variations. In traditional dental bands, the vertical height H is typically constant around the circumference, excluding manufacturing tolerances and other unintentional variations. Moreover, a thickness T (see Figure 2) of the band 10 as measured between the outer surface 28 and the inner surface 30 can vary, excluding manufacturing tolerances and other unintentional variations, in contrast with traditional dental bands where the thickness is constant, excluding manufacturing tolerances and other unintentional variations.

Referring to Figure 3, to facilitate bonding of the band 10 to the tooth 14, some or all of the inner surface 30 is roughened compared to the outer surface 28 (which is typically polished) so that the inner surface 30 has a first average surface roughness Ra and the outer surface 28 has a second average surface roughness Ra, and the first average surface roughness is greater than the second surface roughness. The inner surface 30 of the band 10 can be initially formed with the increased roughness (for example when the band 10 is formed by additive manufacturing), or the increased roughness can be added to the inner surface 30 after the band 10 is formed in a post-processing operation (for example by a mechanical, laser or chemical roughening process). The increased roughness can be formed on some or all of the inner surface 30 of the buccal side portion 18, on some or all of the inner surface 30 of the lingual side portion 20, on some or all the inner surface 30 of the marginal portions 22a, 22b, on some or all of the inner surface 30 of the occlusal portion 24, and combinations thereof.

The increased roughness of the inner surface 30 increases surface area of the inner surface 30 for bonding by the bonding material. An outer surface of the tooth 14 may also be roughened, for example mechanically or chemically, to further enhance the bond with the band 10. The occlusal hole 26 facilitates removal of the bonded band 10 from the tooth 14 using a conventional band removal tool.

Referring to Figures 1 and 2, portions or all of the occlusal portion 24 may be configured to match and cover portions of the inner and/or outer occlusal surfaces of the tooth 14. In some embodiments, the occlusal portion 24 may be configured to match and cover functional and/or non-functional cusps of the tooth 14. Figure 1 illustrates the occlusal portion 24 as including two sections 32a, 32b that cover occlusal surfaces of the tooth, with the section 32a also covering a cusp of the tooth 14. The full coverage of the tooth surface by the band 10, including portions of the occlusal surfaces, reduces the chances of decalcification.

However, the presence of the occlusal portion 24 and coverage of the occlusal surfaces is optional. For example, referring to Figure 4B, the band 10 can be formed without the occlusal portion 24 so that no portion of the band covers occlusal surfaces of the tooth.

Referring to Figure 4A, the teeth have a marginal space 40 located above a contact point 42 of adjacent teeth, and an interproximal space 44 below the contact point 42. The marginal portions 22a, 22b of the band are configured so that they extend into the marginal spaces 40 and the marginal portions 22a, 22b do not extend into the interproximal spaces 44. This construction eliminates the need to separate the adjacent teeth to allow the band 10 to extend into the interproximal space 44 as is required with conventional bands. In other embodiments, the marginal portions 22a, 22b can be sized to extend into the interproximal spaces 44.

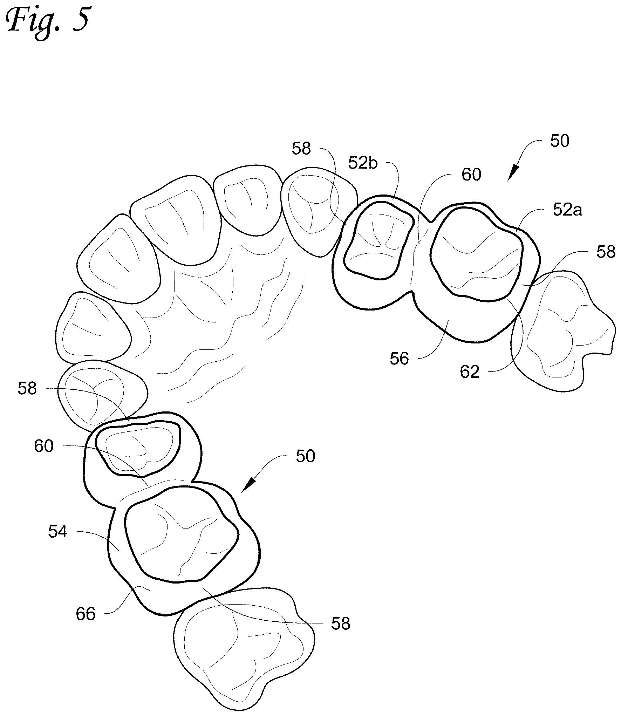

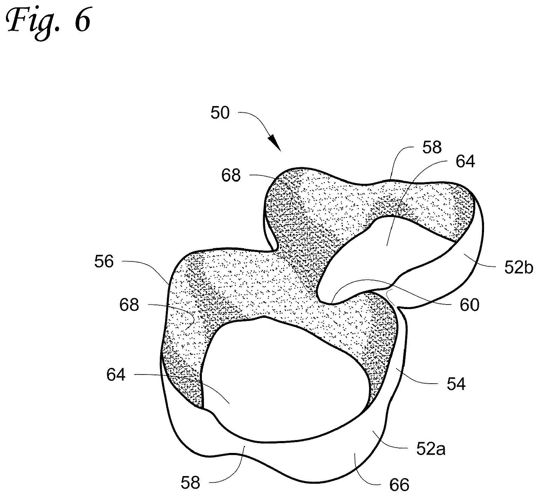

Figures 5 and 6 illustrate another example of patient specific dental bands 50. The configuration and function of the dental bands 50 is similar to the dental band 10. However, each band 50 includes two integrally formed body portions 52a, 52b consisting of a single material, such as a metal material. Each body portion 52a, 52b is configured to be bonded to a respective tooth. Each body portion 52a, 52b can include a buccal side portion 54, a lingual side portion 56, an outer marginal portion 58, and a shared marginal portion 60. Each body portion 52a, 52b may further include an occlusal portion 62 surrounding an occlusal hole 64. However, the occlusal portion 62 is optional and the dental band 50 can be formed without the occlusal portion 62. Each body portion 52a, 52b also includes an outer or exterior surface 66 that faces away from the tooth surfaces and an inner or interior surface 68 that faces the tooth surfaces. Each body portion 52a, 52b is depicted as being configured to extend around or encompass the entire circumference of the teeth as depicted in Figure 5. In other embodiments, the body portions 52a, 52b can be configured to extend around only a portion of the circumference of each tooth.

As with the band 10, each of the bands 50 is manufactured based on the specific anatomy of each patient so that the band 50 is specifically configured to match some or all of the tooth surfaces around which the band is disposed so that the band 50 more closely conforms to or matches the patient's anatomy. For example, a digital scan of each tooth can be obtained and the bands 50 can then be manufactured, for example by additive manufacturing, to match the surfaces of the teeth. In the illustrated example, the buccal side portions 54, the lingual side portions 56, the marginal portions 58, 60, the occlusal portion 62 (if provided), the outer surface 66, and the inner surface 68 are all shaped and configured to match the corresponding geometry of the teeth. Traditional dental bands are not patient specific and are not configured to match the tooth surfaces of the patient. In addition, a vertical height H of the band 50 varies at least partially around the circumference thereof. In traditional dental bands, the vertical height H is typically constant around the circumference, excluding manufacturing tolerances and other unintentional variations. Moreover, a thickness T of the band 50 as measured between the outer surface and the inner surface can vary, in contrast with traditional dental bands where the thickness is constant, excluding manufacturing tolerances and other unintentional variations.

Some or all of the inner surface 68 is roughened compared to the outer surface 66 (which is typically polished) so that the inner surface 68 has a first average surface roughness Ra and the outer surface 66 has a second average surface roughness Ra, and the first average surface roughness is greater than the second surface roughness. The inner surface 68 of the band 50 can be initially formed with the increased roughness (for example when the band 50 is formed by additive manufacturing), or the increased roughness can be added to the inner surface 68 after the band 50 is formed in a post-processing operation (for example by a mechanical, laser or chemical roughening process). The increased roughness can be formed on some or all of the inner surface 68 of the buccal side portion 54, on some or all of the inner surface 68 of the lingual side portion 56, on some or all the inner surface 68 of the marginal portions 58, 60, on some or all of the inner surface 68 of the occlusal portion 62, and combinations thereof.

The increased roughness of the inner surface 68 increases surface area of the inner surface 68 for bonding by the bonding material. Outer surfaces of the teeth may also be roughened, for example mechanically or chemically, to further enhance the bond with the band 50. The occlusal hole 64 facilitates removal of the bonded band 50 from the teeth using a conventional band removal tool.

Figures 7-9 illustrate another example of patient specific dental bands 100 that include a body 102 that is substantially identical to the body 16 in Figures 1-3. Therefore, for sake of the convenience, the body 102 is not further described in detail, it being understood that the configuration of the body 102 can be the same as the body 16 described in detail above.

The dental bands 100 further include a partial dental band 104 extending from the body 102, for example from a lingual side of the body 102 as seen in Figure 7, and over the lingual sides of at least one, for example two, additional teeth. The partial dental band 104 includes an outer or exterior surface 106 that faces away from the tooth surfaces and an inner or interior surface 108 that faces the tooth surfaces. Like the body 102, the partial dental band 104 is manufactured based on the specific anatomy of each patient so that the partial dental band 104 is specifically configured to match some or all of the tooth surfaces over which the partial dental band 104 extends to more closely conform to or match the patient's anatomy. The partial dental band 104 can be considered as being scalloped with indentations and projections that match the lingual surfaces and interproximal spaces of the teeth over which they extend.

Some or all of the inner surface 108 can be roughened compared to the outer surface 106 (which is typically polished) so that the inner surface 108 has a first average surface roughness Ra and the outer surface 106 has a second average surface roughness Ra, and the first average surface roughness is greater than the second surface roughness. The inner surface 108 can be initially formed with the increased roughness (for example when the partial dental band 104 is formed by additive manufacturing), or the increased roughness can be added to the inner surface 108 after the partial dental band 104 is formed in a post-processing operation (for example by a mechanical or chemical roughening process).

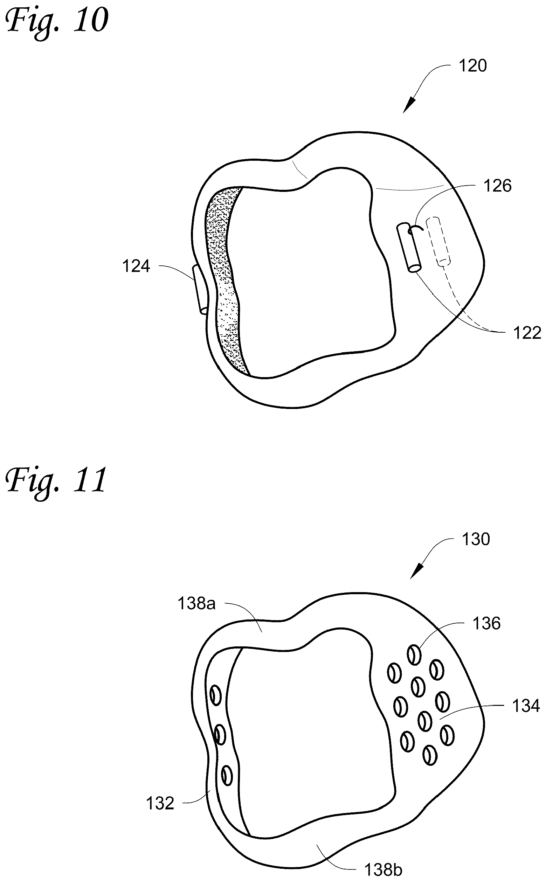

Referring to Figure 10, another example of a dental band 120 is illustrated. In this example, the dental band 120 is illustrated as including one or more lingual tubes 122 on the lingual surface 20 of the band 120. Alternatively, or additionally, one or more buccal tubes 124 can be provided on the buccal surface 18 of the band 120. The tubes 122, 124 are hollow from one end to the other to allow passage of a wire, such as an archwire. As depicted in Figure 10, multiple ones of the tubes 122 (or the tubes 124) may be provided on the lingual surface 20, for example in a vertically stacked arrangement. One or more of the tubes 122, 124 may also be provided with a hook 126 to allow securing of an element, such as a wire or a resilient band, to the tube 122, 124.

Figure 11 illustrates an example of a dental band 130 where a buccal side portion 132 and a lingual side portion 134 are formed as a rigid mesh-like structure (or an aperture structure) defining a plurality of apertures 136 that extend between the interior surface and the exterior surface. The apertures 136 create a surface roughness on the interior surface. However, the interior surfaces of the side portions 132, 134 may also be roughened as described above. The rigid mesh-like structures of the side portions 132, 134 are similar in construction to the apertured bonding pads described in US 2020/0229903. The apertures 136 in the mesh-like structures of the dental band 130 permits use of a radiation curable adhesive, for example an ultra-violet (UV) light curable adhesive, to secure the dental band 130 to the tooth. Marginal portions 138a, 138b, which can be similar to the marginal portions 22a, 22b in Figures 1-3, interconnect the side portions 132, 134. In another embodiment, the entire dental band 130, including the marginal portions 138a, 138b, can be formed as a rigid mesh-like structure. In still another embodiment, only the side portion 132 or the side portion 134 can be formed as a rigid mesh-like structure. The dental band 130 can be formed by additive manufacturing.

The dental bands described herein can be used on any type of dental appliance. For example, Figure 12 illustrates one of the bands 10 of Figures 1-3 used on a unilateral space maintainer 140. Figure 13 illustrates the bands 10 of Figures 1-3 used on a bilateral space maintainer 150. Figure 14 illustrates the bands 100 and the partial dental bands 104 of Figures 7-9 used on a palatal expander 160 that includes a mechanical expansion device 162, such as a screw, that spreads apart the two halves of the expander 160.

Additional possible examples of the invention include the following:
Example 1. A dental band can comprise a metal body consisting of a metal material, where the metal body is configured to be bonded to a tooth; the metal body includes a buccal side portion, a lingual side portion, and marginal portions; and the metal body is configured so that when the metal body is bonded to the tooth, one of the marginal portions extends into a marginal space with an adjacent tooth and the one marginal portion does not extend into an interproximal space with the adjacent tooth.
Example 2. The dental band of example 1, wherein the buccal side portion and/or the lingual side potion are formed as a rigid mesh-like structure with apertures that extend from an interior surface of the metal body to an exterior surface of the metal body.
Example 3. The dental band of example 1 or example 2, further comprising a partial dental band extending from a lingual side of the metal body.
Example 4. A method of forming a dental band for a tooth can comprise manufacturing a metal body consisting of a metal material, and that has a buccal side portion that is configured to match a buccal surface of the tooth, a lingual side portion that is configured to match a lingual surface of the tooth, and an occlusal portion surrounding an occlusal hole, the occlusal portion matches and covers portions of an inner occlusal surface of the tooth and/or an outer occlusal surface of the tooth; and forming the metal body so that when the metal body is secured to the tooth, the metal body has a portion that extends into a marginal space with an adjacent tooth and the portion does not extend into an interproximal space with the adjacent tooth.
Example 5. The method of example 4, comprising forming the metal body by additive manufacturing.
Example 6. The method of example 4, comprising forming the metal body so that the occlusal portion matches and covers portions of the inner occlusal surface of the tooth and the outer occlusal surface of the tooth.
Example 7. The method of example 4, comprising forming the metal body with a partial dental band extending from a lingual side of the metal body.
Example 8. The method of example 4, comprising forming the buccal side portion, the lingual side portion and the occlusal portion based on a digital scan of buccal and lingual surfaces and an occlusal portion, respectively, of the tooth.

The examples disclosed in this application are to be considered in all respects as illustrative and not limitative. The scope of the invention is indicated by the appended claims rather than by the foregoing description; and all changes which come within the meaning and range of equivalency of the claims are intended to be embraced therein.

## Claims

1. A dental appliance, comprising:
a metal body consisting of a metal material, the metal body is configured to be bonded to a tooth;
the metal body including a first, tooth facing surface and a second surface facing away from the tooth;
the first, tooth facing surface has a first average surface roughness and the second surface has a second average surface roughness, and the first average surface roughness is greater than the second surface roughness.

2. The dental appliance of claim 1, wherein the metal body comprises a dental band with a buccal side portion and a lingual side portion.

3. The dental appliance of claim 1, wherein the first, tooth facing surface is formed with the first average surface roughness.

4. The dental appliance of claim 2, further comprising a partial dental band extending from the dental band.

5. The dental appliance of claim 2, wherein the buccal side portion and/or the lingual side potion are formed as a rigid mesh-like structure with apertures.

6. The dental appliance of claim 2, wherein the dental band is configured so that the dental band has a portion that extends into a marginal space and the portion does not extend into an interproximal space.

7. The dental appliance of claim 2, wherein the dental band includes an occlusal portion surrounding an occlusal hole, the occlusal portion matches and covers portions of an inner occlusal surface of the tooth and/or an outer occlusal surface of the tooth.

8. The dental appliance of claim 7, wherein the occlusal portion matches and covers portions of the inner occlusal surface of the tooth and the outer occlusal surface of the tooth.

9. The dental appliance of claim 2, wherein the dental band includes a portion surrounding an occlusal hole, the portion matches and covers portions of functional cusps of the tooth and/or non-functional cusps of the tooth.

10. The dental appliance of claim 9, wherein the portion matches and covers portions of the functional cusps of the tooth and the non-functional cusps of the tooth.

11. A method of forming a dental band for a tooth, comprising:
manufacturing a metal body consisting of a metal material, and that has a buccal side portion that is configured to match a buccal surface of the tooth, and a lingual side portion that is configured to match a lingual surface of the tooth; the buccal side portion and the lingual side portion each include a first, tooth facing surface and a second surface facing away from the tooth;
the first, tooth facing surface has a first average surface roughness and the second surface has a second average surface roughness, and the first average surface roughness is greater than the second surface roughness.

12. The method of claim 11, comprising forming the metal body by additive manufacturing, and the first average surface roughness is formed by the additive manufacturing.

13. The method of claim 11, comprising forming the metal body to include an occlusal portion surrounding an occlusal hole, the occlusal portion matches and covers portions of an inner occlusal surface of the tooth and/or an outer occlusal surface of the tooth; and
forming the metal body so that when the metal body is bonded to the tooth, the metal body has a portion that extends into a marginal space with an adjacent tooth and the portion does not extend into an interproximal space with the adjacent tooth.

14. The method of claim 13 comprising forming the metal body so that the occlusal portion matches and covers portions of the inner occlusal surface of the tooth and the outer occlusal surface of the tooth.

15. The method of claim 11, comprising forming the metal body with a partial dental band extending from a lingual side of the metal body.
